(19) **Europäisches Patentamt**
**European Patent Office**
**Office européen des brevets**

(11) **EP 4 625 253 A1**

(12) **EUROPEAN PATENT APPLICATION**

(43) Date of publication:
**01.10.2025 Bulletin 2025/40**

(51) International Patent Classification (IPC):
*G06N 3/045* (2023.01)

(21) Application number: **25167130.1**

(52) Cooperative Patent Classification (CPC):
**G06N 3/045; G06N 3/08; G06N 3/084**

(22) Date of filing: **28.03.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 US 202463571344 P**

(71) Applicant: **GOOGLE LLC**
**Mountain View CA 94043 (US)**

(72) Inventors:
• **HARTMANN, Florian Nils**
**8002 Zürich (CH)**

## Description

BACKGROUND

This specification relates to processing inputs using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

SUMMARY

This specification describes a system implemented as computer programs on one or more computers in one or more locations that performs a task using a teacher language model neural network to provide additional information to a student language model neural network.

In particular, the system can receive an input query for performing a task, generate an augmented input query using a student language model neural network and a teacher language model neural network, and process the augmented input query using the student language model neural network to generate a response to the input query for performing the task.

Particular embodiments of the subject matter described in this specification can be implemented so as to realize one or more of the following advantages.

Language model neural networks are capable of performing many useful tasks (e.g., computer code generation or editing tasks, text generation or editing tasks, image understanding tasks, and so on) by generating responses to input queries. Sometimes, for these language model neural networks, there is a trade-off between model size (i.e., larger memory footprint, larger number of parameters, and so on) and performance (i.e., the ability to generate responses to the input queries that are accurate and relevant), where larger models offer greater performance at the expense of increased inference time, increase compute resource requirements, or both, which can impede real-time task completion. To improve inference time while maintaining high performance, a cascade system can be employed, for which two or more language model neural networks of various sizes and respective performance capabilities process an input query to generate a response to the input query.

For example, a cascade system can select the smallest model of a set of available models that is sufficient to guarantee a lower bound of performance for processing a query, thereby ensuring that queries are processed as quickly as possible while still guaranteeing a certain level of performance. For example, the cascade system can determine that a smaller local model cannot reliably process an input query it received from a user and, in response, escalates the query to a larger remote model and then sends the user the resulting response to the query generated by the larger remote model. In this way, the larger remote model will only process queries that necessitate its use for performance, and the smaller local model will process all other queries.

Although cascade systems are efficient for processing queries, they are not without drawbacks or challenges. For example, considering the previous example cascade system, the local model may receive a query from a user that contains sensitive data. In which case, escalating the query to the larger remote model poses a significant data security risk for the user. Yet, not using the larger remote model to generate a response to the query can result in poor performance.

For example, consider an input query for the task of determining what disease could best explain a set of health symptoms that are experienced by a user after they have engaged in a specific sequence of activities. For this example, it may be the case that generating a reliable response for such an input query is beyond the performance capabilities of a local model queried by the user but is within the capabilities of a remote model. But escalating the query to the remote model creates an opportunity for an adverse entity to intercept and associate the set of activities and/or symptoms with a specific user, which is a data security risk that needs to be managed. In some cases, the larger remote model can be operated by a third-party. Whilst encryption can be used to protect data in transit over a network, there is no guarantee that the third-party recipient has not been compromised or can be trusted.

Although conventional methods that use cascade systems can attempt to also protect the sensitive information of an input query when it is escalated to a teacher model, such conventional methods often fail, for a single input query, to both protect the sensitive information in the input query and leverage the high performance of the teacher language model to generate a response to the input query.

For example, differential privacy techniques are useful for protecting individual data points in an aggregation (e.g., protecting the data security of a single contribution for a running sum, e.g., protecting single patients' medical diagnosis when computing group statistics in a clinical trial) but are less effective when a single data point must be used directly. In fact, applying differential privacy techniques to a single input query (e.g., applying a technique of masking or adding noise to portions of an input query) obscures both sensitive and non-sensitive information in the query, which limits the ability of a language model neural network (e.g., a teacher language model) to generate a relevant and accurate response to the original query and, therefore, diminishes the performance of the language model neural network.

Processing queries for cases where there are a sufficient number of queries to be able to use differential privacy techniques may improve the protection of sensitive information in queries. For example, differentially private in-context learning is a technique for generating a differentially private response through a noisy consensus among an ensemble of responses based on disjoint exemplar sets of queries. But such techniques require having multiple exemplar queries (i.e., large amount of data, i.e., numerous example queries), which is often not possible and not appropriate for processing a single query (e.g., there is no guarantee, and it is often the case, that a single query, alone or with stored data, will include enough data to be able to perform differentially private in-context learning as described above).

This specification describes a system that can address the aforementioned challenges. That is, this specification describes techniques that can perform a task by processing an input query using a student language model neural network and a teacher language model neural network, where the teacher language model only processes teacher queries that maintain data security regarding the input query, ensuring sensitive information remains protected. In particular, the system can receive an input query for performing a task and, using a student language model neural network to process a student input that includes the input query, generate a teacher query for a teacher language model neural network. The system can then provide the teacher query, which characterizes the task while ensuring the data security of the input query, as an input to the teacher language model neural network and obtain, as output from the teacher language model neural network and in response to the teacher query, a respective example response for each of one or more example queries for performing the task. Next, the system processes an augmented input query that includes (i) the input query, (ii) the one or more example queries, and (iii) the respective example responses for the example queries using the student language model neural network to generate a response to the input query and provides, as output, the response to the input query.

As a result of employing the described techniques, the system eliminates potential sensitive data exposure of input queries while maximizing task performance and can do so for any individual query while minimizing the performance impact on either the student or teacher language model. In some cases, there is no impact to the performance of either the student or teacher language model. By using a teacher query as disclosed herein, the system preserves the data security of the input query from the teacher language model neural network. By using the teacher language model neural network to generate example responses for each of one or more example queries for performing the task, the system leverages the performance of the teacher language model. By processing the augmented input query that includes (i) the input query, (ii) the one or more example queries, and (iii) the respective example responses for the example queries using the student language model neural network, the system leverages the gradient-free learning capabilities of the student language model neural network through natural language in-context learning to maximize the student language model performance. In other words, the teacher language model neural network can provide examples from which the student language model neural network can use as a reference in generating a response to the input query.

As discussed above, the student language model neural network can be deployed on a user device such as a mobile device or edge device that has limited computational resources such as processing power, memory and battery life. The teacher language model neural network can be deployed on a remote device/server. The remote device/server can have access to greater computational resources and may not be so limited as the user device. The user device and remote device/server can form a distributed system and the processing to generate a response to an input query can be divided between the student language model neural network deployed on the user device and the teacher language model neural network deployed on the remote device/server as described herein.

While this specification generally refers to the described techniques preserving data security regarding the input query, the techniques also preserve the privacy of the input query.

The details of one or more embodiments of the subject matter of this specification are set forth in the accompanying drawings and the description below.

According to a first aspect there is provided a method performed by one or more computers. The method includes receiving an input query for performing a task using a student language model neural network. Then, processing a student input that includes the input query using the student language model neural network to generate, as output, a teacher query for a teacher language model neural network, where the teacher query characterizes the task while not including sensitive information of the input query. After that, providing the teacher query as an input to the teacher language model neural network. Next, obtaining, as output from the teacher language model neural network and in response to the teacher query, a respective example response for each of one or more example queries for performing the task. Then, processing an augmented input query that includes (i) the input query, (ii) the one or more example queries, and (iii) the respective example responses for the example queries using the student language model neural network to generate a response to the input query. Then finally, providing, as output, the response to the input query.

In some cases, the student language model neural network is deployed on a user device and the teacher language model neural network is deployed on one or more remote computers that are remote from the user device.

In some implementations, providing the teacher query as input to the teacher language model neural network includes providing the teacher query from the user device to the one or more remote computers over a data communication network.

In some implementations, obtaining, as output from the teacher language model neural network and in response to the teacher query, a respective example response for each of one or more example queries includes receiving, by the user device and over the data communication network, data that includes the respective example responses.

In some cases, the query input is received from a user of the user device.

In some cases, the teacher query includes a natural language description of the input query that specifies one or more properties of the task.

Further in some cases, the output from the teacher language model neural network includes one or more example queries and the respective example responses and is generated in response to an input that includes the teacher query and a natural language instruction to generate example queries and corresponding example responses that have the one or more properties specified by the natural language description.

In some cases, the student input includes the input query and (i) a natural language instruction to generate a natural language description of the input query that specifies the one or more properties of the input query, (ii) one or more example input query - natural language description pairs, or (iii) both.

In some cases, the teacher query includes the example queries.

In some cases, the output from the teacher language model neural network includes the respective example responses and is generated in response to an input that includes the teacher query and a natural language instruction to generate responses to the example queries.

In some cases, the student input includes the input query and (i) a natural language instruction to generate one or more new queries that are similar to the input query but do not reference the same entities as the input query, (ii) one or more example input query - additional query pairs, or (iii) both.

In some cases, the student input includes the input query and (i) a natural language instruction to generate one or more new queries that replace each entity referenced in the input query with a respective different entity, (ii) one or more example input query - additional query pairs, or (iii) both.

In some cases, the teacher language model neural network has more parameters than the student language model neural network.

In some implementations, the method further includes, prior to processing a student input that includes the input query using the student language model neural network to generate, as output, a teacher query for a teacher language model neural network, determining that generating an accurate response to the input query requires making use of the teacher language model neural network.

For some implementations, determining that generating an accurate response to the input query requires making use of the teacher language model neural network includes processing the input query using a classifier neural network.

In some cases, determining that generating an accurate response to the input query requires making use of the teacher language model neural network includes processing a first input that includes the input query using the student language model neural network to generate one or more student outputs that each define a respective candidate response to the input query. It additionally includes determining, from the student outputs, that generating an accurate response to the input query requires making use of the teacher language model neural network.

According to a second aspect, there is provided the methods of the first aspect performed by one or more computers and one or more storage devices storing instructions that when executed by the one or more computers cause the one or more computers to perform the operations of the respective method.

According to a third aspect, there is provided the methods of the first aspect performed by one or more computer storage media storing instructions that when executed by one or more computers cause the one or more computers to perform the operations of the respective method.

Other features, aspects, and advantages of the subject matter will become apparent from the description, the drawings, and the claims.

BRIEF DESCRIPTION OF THE DRAWINGS

FIG. 1 shows a computer system.

FIG. 2 is a flow diagram of an example process for performing a task by using a teacher language model neural network to provide additional information to a student language model neural network.

FIG. 3 is a flow diagram of an example process for determining that generating an accurate response to the input query requires making use of the teacher language model neural network.

FIG. 4 shows an example enumeration of steps included in the process for performing a task by using a teacher language model neural network to provide additional information to a student language model neural network.

FIG. 5 is an example of the performance of the described techniques.

FIG. 6 is an example of the performance of the described techniques.

DETAILED DESCRIPTION

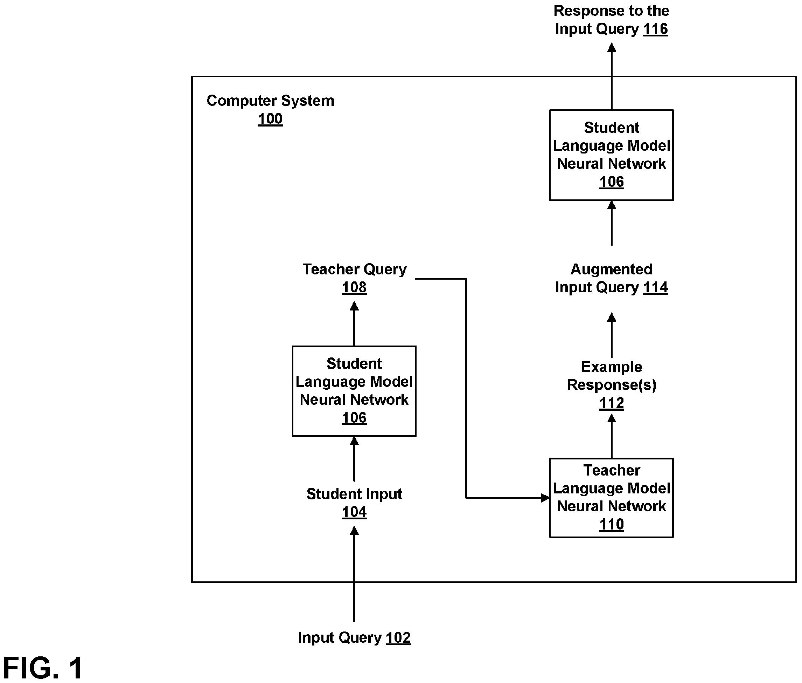

FIG. 1 shows an example computer system 100. The computer system 100 is an example of a system implemented as computer programs on one or more computers in one or more locations, in which the systems, components, and techniques described below can be implemented.

The system 100 receives an input query 102 for performing a task and generates a response 116 to the input query 102 using both a student language model neural network 106 and teacher language model neural network 110 while also using data security techniques that reduce the risk of exposing sensitive information from the input query 102 when using the teacher language model neural network 110. For example, the system 100 can be a cascade system of neural networks, e.g., language models, that includes a local model (i.e., a student language model neural network 106) and a larger, remote model (i.e., a teacher language model neural network 110) and can use data security techniques that reduce the risk of leaking sensitive information included in the input query when using the remote model. While the system 100 preserves data security regarding the input query 102, the system also preserves the privacy of the input query 102.

In particular, the system 100 receives an input query 102 for performing a task using a student language model neural network 106. For example, the student language model neural network 106 can be deployed on a user device and the system 100 can receive the input query 102 at the user device, e.g., from a user of the device. As another example, the system 100 can receive an input query 102 from a user using a user device over a network, e.g., by establishing a network connection with the user device. For example, the network can be a cloud-based network, the internet, or a local network.

Generally, the input query 102 can include any type of input data (e.g., natural language text data, audio data, image data, video data, any combination of these data, and so on) and can be represented as an input sequence, e.g., a sequence of natural language text, image pixels or patches, video frames, video frame patches, audio waveform time windows, spectrogram amplitude frequency-time windows, any combination of these elements, and so on. The system 100 can represent the input sequence as a sequence of tokens, e.g., sequence of text tokens, e.g., words, word pieces, bytes, characters, numbers, punctuation, or other text symbols and tokens representing other types of data, e.g., image data, video data, audio data, and so on. That is, the system 100 can generate a sequence of tokens by mapping the input sequence representation of the input query 102 to a sequence of tokens.

For example, if the input query 102 includes natural language text data, then the system 100 can, e.g., map each character, word, or sub-word of the natural language text representation to a corresponding token.

As another example, if the input query 102 includes audio data, then the system 100 can, e.g., convert the audio into a spectrogram and map small segments (i.e., frequency, time patches of the spectrogram) to corresponding tokens.

As another example, if the input query 102 includes image data, then the system 100 can, e.g., divide each image into patches or pixels and map each patch or pixel to a corresponding token.

As another example, if the input query 102 includes video, then the system 100 can, e.g., divide each video into a sequence of images and divide each image into patches or pixels and map each patch or pixel to a corresponding token. Alternatively, a token can represent a spatiotemporal portion of the video.

In certain situations, the system 100 can convert the input query 102 from an original modality to a new modality. For instance, a user device that receives the input query 102, e.g., a smartphone, can perform speech-to-text conversion in a straightforward process where spoken words (i.e., audio data) are transcribed into natural language text and further into text tokens. For such an instance, a speech-to-text conversion may be used so that speech representing an input query 102 can be processed as natural language text sequence.

The task that the input query 102 is for can be any task that requires generating an output sequence that includes a respective output token at each of multiple output positions. Examples of such tasks include computer code generation or editing tasks, text generation or editing tasks, image understanding tasks, and so on. Further details of possible tasks and the output sequence are described below.

Rather than directly generating a response to the input query 102 using the student language model neural network 106, the system 100 processes a student input 104 that includes the input query 102 using the student language model neural network 106 to generate, as output, a teacher query 108 for a teacher language model neural network 110. In some cases, the system 100 first determines that generating an accurate response to the input query 102 requires making use of the teacher language model neural network 110, and then, in response to this determination, the system 100 generates the teacher query 108 as described above. Further in some cases, if the system 100 determines that generating an accurate response to the input query 102 does not require making use of the teacher language model neural network 110, the system 100, in response, generates a response to the input query 102 using the student language model neural network 106.

The student input 104 can be represented as a sequence of tokens (i.e., a sequence of text tokens, tokens representing other types of data, e.g., image data, video data, audio data, and so on, or any combination of types of tokens).

Generally, the teacher query 108 characterizes the task while ensuring the data security of the input query 102, i.e., without revealing, to the teacher language model 110, sensitive information that is contained in the input query 102. That is, the system 100 can use a student input 104 that includes a natural language instruction to transform or generalize the sensitive information of the input query 102 (e.g., instruction to create a high-level description of the input query, instruction to generate new similar example input queries of the input query, or instruction to generate new example input queries by replacing entities of the input query) when generating a teacher query 108.

Generally, the teacher query 108 can be represented as a sequence of tokens (i.e., a sequence of text tokens, tokens representing other types of data, e.g., image data, video data, audio data, and so on, or any combination of types of tokens).

Generally, sensitive information is any information that, if exposed or accessed by unauthorized parties, could result in harm. Sensitive information can include, e.g., entities that are referenced in the input query 102 or other personally-identifying information in the input query 102, e.g., name, address, phone number, health data, finance data, personal images, personal audio, personal video, and so on.

Examples of teacher queries 108 include a high-level description of the input query 102, example input queries that are similar to the input query 102 but do not include sensitive information in the input query 102, and/or example input queries that replace the entities of the input query 102.

Further examples of teacher queries 108 are described in more detail below.

The system 100 provides the teacher query 108 as an input to the teacher language model neural network 110. As one example, the teacher language model neural network 110 can be deployed on one or more computers that are remote from the user device, and the system 100 can provide the teacher query 108 as input by providing the teacher query 108 from the user device to the one or more remote computers over a data communication network.

As a particular example, the teacher language model neural network 110 may be a larger neural network than the student language model neural network 106 that cannot be deployed on the user device, e.g., because the larger teacher language model neural network 110 has an excessive memory footprint or because performing inference using the larger teacher language model neural network 110 given the limited processing capacity of the user device results in unacceptable latency.

The system 100 obtains, as output from the teacher language model neural network 110 and in response to the teacher query 108, a respective example response 112 for each of one or more example queries for the task. That is, because the teacher language model neural network 110 has a larger capacity and is more capable, e.g., due to increased size, the teacher language model neural network 110 is able to more accurately generate a response to queries associated with the task. It will be appreciated that the teacher language model neural network 110 does not receive the original input query 102. Rather, as described, the teacher language model neural network 110 receives a teacher query 108 that is generated such that the sensitive information from the input query 102 is transformed. The teacher language model neural network 110 can provide as a response to the teacher query 108, one or more example query-response pairs for the student language model neural network 106 to use as a reference when attempting to generate a response to the original input query 102 as described in more detail below. The example queries of the query-response pairs can be generated in a variety of ways.

For example, the one or more example queries can be included in the input to the teacher language model neural network 110 within the teacher query 108, can be generated by the teacher language model neural network 110 in response to an input that includes a natural language instruction to generate example queries along with the teacher query 108, or both.

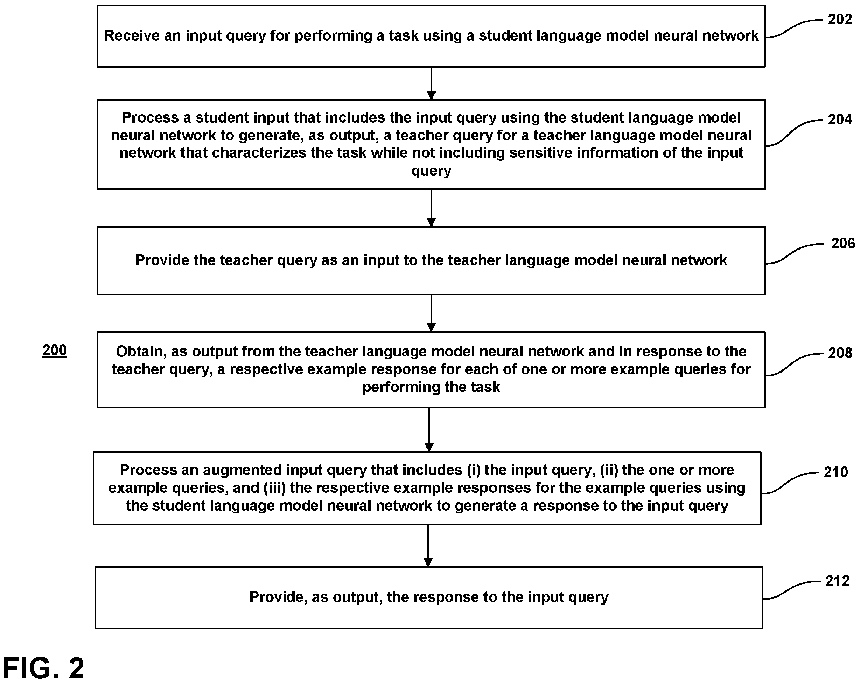

In some cases, the system 100 generates the one or more example queries as part of generating the teacher query 108 using the student language model neural network 106. For example, the system 100 can generate the one or more example queries using the student language model neural network 106 in response to a student input 104 that includes an instruction to generate one or more example queries. Further details of generating the one or more example queries using the student language model neural network 106 are described below with respect to FIG. 2.

In some other cases, the system 100 generates the one or more example queries as part of generating the example responses 112 using the teacher language model neural network 110. For example, the system 100 can generate the one or more example queries using the teacher language model neural network 110 in response to an input to the teacher model that includes a natural language instruction to both generate example queries along with their respective responses. Further details of generating the one or more example queries using the teacher language model neural network 110 are described below with respect to FIG. 2.

In yet other implementations, the one or more example queries include one or more examples generated using the student language model neural network 106, e.g., using the above example process, and one or more example queries generated using the teacher language model neural network 110, e.g., using the above example process.

The example queries and example responses 112 for the task can all be represented as sequences of tokens (i.e., sequences of text tokens, tokens representing other types of data, e.g., image data, video data, audio data, and so on, or any combination of types of tokens).

The system 100 processes an augmented input query 114 that includes (i) the input query 102, (ii) the one or more example queries, and (iii) the respective example responses 112 for the example queries using the student language model neural network 106 to generate a response to the input query 116. By including the one or more example queries, and the respective example responses 112 for the example queries in the augmented input query 114, the system 100 can use the student language model neural network 106 to generate an improved response to the input query 116 relative to using the student language model neural network 106 to directly process the input query 102. This improved response generation of the student language model neural network 106 is due to the student language model neural network 106 extracting patterns from the example queries and example responses 112 in the augmented input query 114 (referred to as gradient-free in-context-learning). Moreover, an advantage of gradient-free in-context-learning is that the system 100 can generate improved responses to the input query 116 without spending time and compute resources to further train (e.g., retrain or fine tune) the student language model neural network 106, the teacher language model neural network 110, or both.

The system 100 provides, as output, the response 116 to the input query. For example, the system 100 can provide the output for presentation to a user of the user device, e.g., the user that submitted the query, or to another software application running on the user device.

For example, the output can be an output sequence, e.g., an output sequence of tokens, i.e., a sequence of text tokens, tokens representing other types of data, e.g., image data, video data, audio data, and so on, or any combination of types of tokens. At the same time, the output sequence of tokens of the response can be detokenized (i.e., converting a sequence of tokens to natural language text, image, video, audio, any combination of these, and so on) and presented to the user, e.g., through a device display screen and speaker, e.g., displaying natural language text, image, video, playing audio, or any combination of these.

Thus, the system 100 leverages the teacher language model neural network 110 to give the student language model neural network 106 additional information about how to respond to the given query in the form of the query - response pairs without exposing to the teacher language model neural network 110 any sensitive information from the input query 102.

In particular, although the student language model neural network 106 cannot provide the input query 102 for direct response generation by the teacher language model neural network 110 because the security of the data contained in the input query needs to be preserved, by obtaining, using the teacher language model neural network 110, example responses to queries that are similar to but different from the input query 102, the student language model neural network 106 is provided with additional context that allows the student language model neural network 106 to accurately respond to the input query 102.

In some situations, any of the language model neural networks of the system 100 can be auto-regressive type neural networks, i.e., the neural network auto-regressively generates an output sequence of tokens. More specifically, the auto-regressively generated output is created by generating each particular token in the output sequence conditioned on a current input sequence that includes any tokens that precede the particular token in the output sequence, i.e., the tokens that have already been generated for any previous positions in the output sequence that precede the particular position of the particular token.

That is, to generate a given token of the output sequence from a vocabulary, the neural network generates a score or probability distribution over the tokens of the vocabulary conditioned on the input sequence and previously generated output sequence tokens and selects the token with the highest score or probability. Then the system can repeat token selection in this manner until a stopping criterion is reached, e.g., generating a predetermined number of tokens for the output sequence or producing a token signifying the end of the output sequence. In some implementations, instead of selecting the tokens of the sequence to be those with the highest probability at each point of the sequence, the system samples the token according to the scores or probabilities of the tokens. That is, the system can determine the next token of the output sequence by sampling the probability distribution over tokens generated by the neural network conditioned on the particular input sequence and previously generated output sequence tokens.

For example, any of the neural networks can be an auto-regressive attention neural network that includes (i) a plurality of attention blocks that each apply a self-attention operation and (ii) an output subnetwork that processes an output of the last attention block to generate the score distribution.

In this example, the neural networks can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A.Wu, E. Elsen, S.

M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J. Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020.

More specifically, the neural networks can include a plurality of layers that include a plurality of attention layers.

Each attention layer receives a respective hidden state for each of the input positions and updates the respective hidden states for each of the input positions by applying an attention mechanism to the respective hidden states.

Generally, as described above, the teacher language model neural network 110 is larger, more capable, or both larger and more capable than the student language model neural network 106. For example, the teacher language model neural network 110 can be larger relative to the student language model neural network 106 in that it can have a larger architecture (i.e., can have more parameters, e.g., more neural network layers, more neurons per layer, more attention heads per layer, and so on), can require using more computational resources (e.g., has a larger memory footprint or requires using many hardware accelerators), or both. As another example, the teacher language model neural network 110 can be more capable relative to the student language model neural network 106 in that it can generate responses to input queries with lower latency, can generate more accurate and relevant responses to input queries, or both.

As described above, generally, the task can be any task that requires generating an output sequence that includes a respective output token at each of multiple output positions. Examples of such tasks include computer code generation or editing tasks, text generation or editing tasks, image understanding tasks, and so on.

Some examples of machine learning tasks that any of the neural networks of the system 100 can be configured to perform follow.

In any of the implementations below, a neural network may be deployed as part of a chat bot, dialogue agent, or other software tool that receives inputs from users and provides outputs in response to the received input, e.g., as part of a conversation or dialogue. In these implementations, the input sequences received by the neural network are (generated from) user inputs and the output sequences generated by the neural network can be used to generate responses to the user inputs.

In implementations the neural network may be configured as, or include, a generative (large) language model or a multi-modal model, e.g., a visual and language model, to perform these example machine learning tasks.

In some cases, the neural network is a neural network that is configured to perform an image processing task, i.e., receive an input image and to process the input image to generate a network output for the input image. For example, the task may be image classification and the output generated by the neural network for a given image may be scores for each of a set of object categories, with each score representing an estimated likelihood that the image contains an image of an object belonging to the category. As another example, the task can be image embedding generation and the output generated by the neural network can be a numeric embedding of the input image. As yet another example, the task can be object detection and the output generated by the neural network can identify locations in the input image at which particular types of objects are depicted. As yet another example, the task can be image segmentation and the output generated by the neural network can assign each pixel of the input image to a category from a set of categories. In some other cases, the neural network is a neural network that is configured to perform an image generation task, where the input is a conditioning input and the output is a sequence of intensity value inputs for the pixels of an image.

As one example, the task may be a neural machine translation task. For example, if the input to the neural network is a sequence of text, e.g., a sequence of words, phrases, characters, or word pieces, in one language, the output generated by the neural network may be a translation of the sequence of text into another language, i.e., a sequence of text in the other language that is a translation of the input sequence of text. The vocabulary for the input tokens may be words, wordpieces or characters of the first language, and the vocabulary for the output tokens may be words, wordpieces or characters of the other language. As a particular example, the task may be a multi-lingual machine translation task, where a single neural network is configured to translate between multiple different source language - target language pairs. In this example, the source language text may be augmented with an identifier that indicates the target language into which the neural network should translate the source language text.

Some implementations may be used for automatic code generation. For example, the input tokens may represent words, wordpieces or characters in a first natural language and the output tokens may represent instructions in a computer programming or markup language, or instructions for controlling an application program to perform a task, e.g., build a data item such as an image or web page.

As another example, the task may be an audio processing task. For example, if the input to the neural network is a sequence representing a spoken utterance, the output generated by the neural network may be a score for each of a set of pieces of text, each score representing an estimated likelihood that the piece of text is the correct transcript for the utterance. As another example, if the input to the neural network is a sequence representing a spoken utterance, the output generated by the neural network can indicate whether a particular word or phrase ("hotword") was spoken in the utterance. As another example, if the input to the neural network is a sequence representing a spoken utterance, the output generated by the neural network can be a classification of the spoken utterance into one of a plurality of categories, for example an identity of the natural language in which the utterance was spoken.

As another example, the task can be a natural language processing or understanding task, e.g., an entailment task, a paraphrase task, a textual similarity task, a sentiment task, a sentence completion task, a grammaticality task, and so on, that operates on a sequence of text in some natural language.

As another example, the task can be a text to speech task, where the input is text in a natural language or features of text in a natural language and the network output is a spectrogram, a waveform, or other data defining audio of the text being spoken in the natural language.

As another example, the task can be a health prediction task, where the input is a sequence derived from electronic health record data for a patient and the output is a prediction that is relevant to the future health of the patient, e.g., a predicted treatment that should be prescribed to the patient, the likelihood that an adverse health event will occur to the patient, or a predicted diagnosis for the patient. Such electronic health data may, for example, comprise one or more sequences of physiological data taken from a patient, with the output being a corresponding prediction that relates to those sequences of data. Examples of physiological data and a corresponding prediction include: blood glucose measurements, with the prediction being a predicted future blood glucose measurement or the prediction of a hyper- or hypo-glycemic event; a heart rate, with the prediction being the presence or absence of a heart condition, or a future cardiac event; blood pressure measurements, with the prediction being the risk of a future heart condition; or the like.

As another example, the task can be a text generation task, where the input is a sequence of text, and the output is another sequence of text, e.g., a completion of the input sequence of text, a response to a question posed in the input sequence, or a sequence of text that is about a topic specified by the first sequence of text. As another example, the input to the text generation task can be an input other than text, e.g., an image, and the output sequence can be text that describes the input.

In some implementations the input sequence represents data to be compressed, e.g., image data, text data, audio data, or any other type of data; and the output sequence a compressed version of the data. The input and output tokens may each comprise any representation of the data to be compressed/compressed data, e.g., symbols or embeddings generated/decoded by a respective neural network.

As another example, the task can be an agent control task, where the input is a sequence of observations or other data characterizing states of an environment and the output defines an action to be performed by the agent in response to the most recent data in the sequence. The agent can be, e.g., a real-world or simulated robot, a control system for an industrial facility, or a control system that controls a different kind of agent. The observations may comprise sensor data captured by sensors associated with (e.g., part of) the agent, for example visual data, LIDAR data, sonar data, agent configuration data (e.g., joint angles), agent orientation data, or the like.

In some implementations, the environment is a real-world environment, the agent is a mechanical (or electro-mechanical) agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot interacting with the environment to accomplish a specific task, e.g., to locate or manipulate an object of interest in the environment or to move an object of interest to a specified location in the environment or to navigate to a specified destination in the environment.

In these implementations, the observations may include, e.g., one or more of: images, object position data, and sensor data to capture observations as the agent interacts with the environment, for example sensor data from an image, distance, or position sensor or from an actuator. For example, in the case of a robot, the observations may include data characterizing the current state of the robot, e.g., one or more of: joint position, joint velocity, joint force, torque or acceleration, e.g., gravity-compensated torque feedback, and global or relative pose of an item held by the robot. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. The observations may also include, for example, sensed electronic signals such as motor current or a temperature signal; and/or image or video data for example captured by a camera or a LIDAR sensor, e.g., data from sensors of the agent or data from sensors that are located separately from the agent in the environment.

In these implementations, the actions may be control signals to control the robot or other mechanical agent, e.g., torques for the joints of the robot or higher-level control commands, or the autonomous or semi-autonomous land, air, sea vehicle, e.g., torques to the control surface or other control elements, e.g., steering control elements of the vehicle, or higher-level control commands. The control signals can include for example, position, velocity, or force/torque/acceleration data for one or more joints of a robot or parts of another mechanical agent. The control signals may also or instead include electronic control data such as motor control data, or more generally data for controlling one or more electronic devices within the environment the control of which has an effect on the observed state of the environment. For example in the case of an autonomous or semi-autonomous land or air or sea vehicle the control signals may define actions to control navigation, e.g., steering, and movement, e.g., braking and/or acceleration of the vehicle.

In some implementations the environment is a simulation of the above-described real-world environment, and the agent is implemented as one or more computers interacting with the simulated environment. For example, a system implementing the neural network may be used to select actions in the simulated environment during training or evaluation of the system and, after training, or evaluation, or both, are complete, the action selection policy may be deployed for controlling a real-world agent in the particular real-world environment that was the subject of the simulation. This can avoid unnecessary wear and tear on and damage to the real-world environment or real-world agent and can allow the control neural network to be trained and evaluated on situations that occur rarely or are difficult or unsafe to re-create in the real-world environment. For example, the system may be partly trained using a simulation of a mechanical agent in a simulation of a particular real-world environment, and afterwards deployed to control the real mechanical agent in the particular real-world environment. Thus in such cases the observations of the simulated environment relate to the real-world environment, and the selected actions in the simulated environment relate to actions to be performed by the mechanical agent in the real-world environment.

In some implementations, as described above, the agent may not include a human being (e.g., it is a robot). Conversely, in some implementations the agent comprises a human user of a digital assistant such as a smart speaker, smart display, or other device. Then the information defining the task can be obtained from the digital assistant, and the digital assistant can be used to instruct the user based on the task.

For example, a system implementing the neural network may output to the human user, via the digital assistant, instructions for actions for the user to perform at each of a plurality of time steps. The instructions may for example be generated in the form of natural language (transmitted as sound and/or text on a screen) based on actions chosen by the system. The system chooses the actions such that they contribute to performing a task. A monitoring system (e.g., a video camera system) may be provided for monitoring the action (if any) which the user actually performs at each time step, in case (e.g., due to human error) it is different from the action which the system instructed the user to perform. Using the monitoring system the system can determine whether the task has been completed. The system may identify actions which the user performs incorrectly with more than a certain probability. If so, when the system instructs the user to perform such an identified action, the system may warn the user to be careful. Alternatively or additionally, the system may learn not to instruct the user to perform the identified actions, i.e., ones which the user is likely to perform incorrectly.

More generally, the digital assistant instructing the user may comprise receiving, at the digital assistant, a request from the user for assistance and determining, in response to the request, a series of tasks for the user to perform, e.g., steps or sub-tasks of an overall task. Then for one or more tasks of the series of tasks, e.g., for each task, e.g., until a final task of the series the digital assistant can be used to output to the user an indication of the task, e.g., step or sub-task, to be performed. This may be done using natural language, e.g., on a display and/or using a speech synthesis subsystem of the digital assistant. Visual, e.g., video, and/or audio observations of the user performing the task may be captured, e.g., using the digital assistant. A system as described above may then be used to determine whether the user has successfully achieved the task, e.g., step or sub-task, i.e., from the answer as previously described. If there are further tasks to be completed the digital assistant may then, in response, progress to the next task (if any) of the series of tasks, e.g., by outputting an indication of the next task to be performed. **In** this way the user may be led step-by-step through a series of tasks to perform an overall task. During the training of the neural network, training rewards may be generated, e.g., from video data representing examples of the overall task (if corpuses of such data are available) or from a simulation of the overall task.

In a further aspect there is provided a digital assistant device including a system as described above. The digital assistant can also include a user interface to enable a user to request assistance and to output information. In implementations this is a natural language user interface and may comprise a keyboard, voice input-output subsystem, and/or a display. The digital assistant can further include an assistance subsystem configured to determine, in response to the request, a series of tasks for the user to perform. In implementations this may comprise a generative (large) language model, in particular for dialog, e.g., a conversation agent such as Sparrow (Glaese et al. arXiv:2209.14375) or Chinchilla (Hoffmann et al. arXiv:2203.15556). The digital assistant can have an observation capture subsystem to capture visual and/or audio observations of the user performing a task; and an interface for the above-described language model neural network (which may be implemented locally or remotely). The digital assistant can also have an assistance control subsystem configured to assist the user. The assistance control subsystem can be configured to perform the steps described above, for one or more tasks e.g., of a series of tasks, e.g., until a final task of the series. More particularly the assistance control subsystem and output to the user an indication of the task to be performed, capture, using the observation capture subsystem, visual or audio observations of the user performing the task, determine from the above-described answer whether the user has successfully achieved the task. In response the digital assistant can progress to a next task of the series of tasks and/or control the digital assistant, e.g., to stop capturing observations.

As another example, the task can be a genomics task, where the input is a sequence representing a fragment of a DNA sequence or other molecule sequence and the output is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the machine learning task is a combination of multiple individual machine learning tasks, i.e., the system is configured to perform multiple different individual machine learning tasks, e.g., two or more of the machine learning tasks mentioned above. For example, the system can be configured to perform multiple individual natural language understanding tasks, with the network input including an identifier for the individual natural language understanding task to be performed on the network input.

In some cases, the machine learning task is a multi-modal processing task that requires processing multi-modal data. In general, multi-modal data is a combination of two or more different types of data, e.g., two or more of audio data, image data, text data, or graph data. As one example the multi-modal data may comprise audio-visual data, comprising a combination of pixels of an image or of video and audio data representing values of a digitized audio waveform. As another example the multi-modal data may comprise a combination of i) text data representing text in a natural language and ii) pixels of an image or of video or audio data representing values of an audio waveform. Optionally, but not necessarily, the different types of data may represent the same or overlapping objects using the different modalities (types), and when processing multi-modal data the data may be mapped into a common embedding space.

As a particular example, the task is a multi-modal processing task that requires processing both text and image inputs, so that the neural network includes both a computer vision neural network and a text processing neural network. That is, the target output to be generated by the computer vision neural network for a given image depends on one or more outputs generated by the text processing neural network for one or more corresponding text inputs (and vice versa). Examples of such tasks include open-vocabulary image classification, open-vocabulary object detection, image captioning, text-based image search, image-based retrieval, and so on.

More generally, the multi-modal processing task may correspond to any of the tasks previously described for any of the types of data making up the multi-modal combination. For example, an accuracy of the previously described tasks may be increased when the task is applied to multi-modal data combining the data for which the task has been previously described and another type of data. For example, detection or classification of an object or event may be improved when data of multiple different types (modalities) is processed.

More generally, the task to be performed by the neural network can be specified by the input sequence. As a particular example, the input sequence can include a prompt or an instruction that specifies the task that is to be performed by the neural network. Optionally, in this example, the input sequence also includes context for performing the task.

FIG. 2 is a flow diagram of an example process 200 for performing a task by using a teacher language model neural network to provide additional information to a student language model neural network. For convenience, the process 200 will be described as being performed by a system of one or more computers located in one or more locations. For example, a computer system, e.g., the computer system 100 of FIG. 1, appropriately programmed in accordance with this specification, can perform the process 200.

The system receives an input query for performing a task using a student language model neural network (step 202).

As described above, generally, the input query can include any type of input data.

For example, for the task of intent recognition of an utterance, the input query could be the natural language text "place this song into my newest playlist" or an audio-wave form capture of those spoken words by a user converted to the natural language text form.

As another example, for the task of language translation, the input query could be natural language text in a first language to be translated to a second language, e.g., the input query could be "Where is the library?" with the task of translating this English sentence to a Spanish sentence.

As another example, for the task of image captioning, the input query could include image data (e.g., a sequence of image pixels that represent a cat napping) to be labeled using natural language text.

As another example, for the task of summarizing speech, the input query could include audio data (e.g., audio spectrogram of a classroom lecture or presentation) to be summarized into natural language text.

As another example, for the task of video summarization, the input query could include video data (e.g., a sequence of video frames of a cat climbing a tree) to be summarized as a concise body of natural language text.

As another example, for the task of image object detection, the input query could include an image and, optionally, text (e.g., an image and a natural language text description of an object that should be identified in the image).

In some cases, the student language model neural network is deployed on a user device and the teacher language model neural network is deployed on one or more remote computers that are remote from the user device.

For example, the student language model neural network can be deployed on a user smart phone, and the teacher language model neural network can be deployed on one or more remote central server computers.

As another example, the student language model neural network can be deployed on a user tablet, and the teacher language model neural network can be deployed on one or more remote cloud server computers.

As another example, the student language model neural network can be deployed on a user laptop, and the teacher language model neural network can be deployed on one or more remote workstation computers.

In some cases, the system receives the query input from a user of the user device.

For example, a user of a smart phone, tablet, or laptop, can provide the input query to the end user device through the end user device interface (i.e., the touch screen for the smart phone and tablet and the keyboard for the laptop).

The system processes a student input that includes the input query using the student language model neural network to generate, as output, a teacher query for a teacher language model neural network that characterizes the task while not including sensitive information of the input query (step 204). Therefore, by not including sensitive information of the input query in the teacher query, the system preserves the data security regarding the input query, and, additionally, the system preserves the privacy of the input query.

For example, the student input can include a natural language instruction that instructs the student neural network to generate a teacher query that includes example queries similar to the input query for performing the task, that includes a high level description of the input query for performing the task, or both but does not include the sensitive information of the input query.

For example, the student input can include natural language instructions to identify and transform the sensitive information of the input query and then generate example queries for performing the task based on the transformed input query. As a particular example, the student input can be "Please generate {expansion_size} more English sentences like the one below? Generate new ones instead of just repeating it. \n English sentence: {english_sentence}" where {expansion_size} denotes the number of examples to generate and {english_sentence} is the input query.

As another example, the student input can include natural language instructions to generate a high level description of the input query but to omit the sensitive information of the input query in the description. As a particular example, the student input can be "The following query is privately shared with you and will not be given to the participants. Describe the format (any special markings used), and general patterns and any other useful generic notes that you can find based on the query. What you write will be the only hint given to the participant and they are expected to output correct replies in the right format. \n Question: {english_sentence} \n Task format with detailed instructions:" where {english_sentence} is the input query.

In some cases, the student input includes the input query and (i) a natural language instruction to generate a natural language description of the input query that specifies the one or more properties of the input query, (ii) one or more example input query - natural language description pairs, or (iii) both.

As an example for such cases, for the task of solving math word problems, the student input can include the input query "Two thirds of Jana's puppies are Pomeranians. One third of the Pomeranians are girls. If there are 6 Pomeranian girls, how many puppies does Jana have?", and the resulting natural language description of the input query can be, e.g., "a math word problem for division and ratios involving percentages". The natural language description captures the core properties of the input query, i.e., that it is a math word problem that involves fractions (i.e., division, ratios, percentages, and so on).

As another example for such cases, for the task of object detection in an image (e.g., detecting and identifying an object instance among objects in a scene), the student input can include an input query that includes an image of a scene, and the resulting natural language description of the input query can be, e.g., "an object detection in an image problem for identifying an object instance among one or more objects in a scene".

As another example for such cases, for the task of object detection in an image (e.g., detecting and identifying medical products in a medicine cabinet), the student input can include an input query that includes an image of a user medicine cabinet, and the resulting natural language description of the input query can be, e.g., "an object detection in an image problem for identifying pills, creams, powders, syrups, eye drops, and other medicinal products".

As another example for such cases, for the task of intent recognition, (e.g., a spoken command for controlling a device), the student input can include an input query that includes audio spectrogram of a spoken command such as "show the tv show <tv-show-title>", and the resulting natural language description of the input query can be, e.g., "an audio spectrogram intent recognition problem for identifying that a user wishes to play specific visual media content". The natural language description captures the core properties of the input query, i.e., that it is an intent recognition problem for identifying a user wishes to start a playback of a tv show.

In some implementations, when the student input includes natural language instruction to generate a natural language description of the input query that specifies one or more properties of the task, the teacher query includes that natural language description of the input query.

For example, the above example natural language description "a math word problem for division and ratios involving percentages" for the input query "Two thirds of Jana's puppies are Pomeranians. One third of the Pomeranians are girls. If there are 6 Pomeranian girls, how many puppies does Jana have?" can be included in the teacher query.

In some cases, the student input includes the input query and (i) a natural language instruction to generate one or more new queries that are similar to the input query but do not reference the same entities as the input query, (ii) one or more example input query - additional query pairs, or (iii) both.

As described above, generally, entities are any information that one may wish to keep secure for any reason, such as such as names, locations, email addresses, or numbers.

As an example for such cases, for the task of solving math word problems, the student input can include the input query "Two thirds of Jana's puppies are Pomeranians. One third of the Pomeranians are girls. If there are 6 Pomeranian girls, how many puppies does Jana have?", and the result of a natural language instruction to generate one or more new queries that are similar to the input query but do not reference the same entities as the input query can be, e.g., "If 3/4 of a bag of marbles are red and the rest are blue, and there are 21 red marbles, how many marbles are blue?". Both the input query and the new query represent a task that is solving a math word problem, but, while the new query is similar to the input query, the new query does not reference the same entities as are in the input query, i.e., the name "Jana" is not mentioned, 3/4 replaces two thirds, marbles replaces puppies, and so on.

As another example for such cases, for the task of object detection in an image (e.g., detecting and identifying an object instance among objects in a scene), the student input can include the input query that includes an image of a scene. The result of a natural language instruction to generate one or more new queries that are similar to the input query but do not reference the same entities as the input query can be, e.g., an image of a different scene with different number and types of objects in a different spatial arrangement. Both the input query and the new query are images in which the object instance needs to be identified, but, while the new query is similar to the input query, the new query does not reference the same entities as are in the input query, e.g., the new query has different types or variations of objects with potentially different spatial arrangement, e.g., if the input query included an object instance that is a car of a particular color, make, model, license plate number, and so on, then the new query can include an object instance of a car of a different color, make, model, license plate number, and so on, in a different spatial arrangement.

As another example for such cases, for the task of object detection in an image (e.g., detecting and identifying medical products in a medicine cabinet), the student input can include the input query that includes an image of a user's medicine cabinet, and the result of a natural language instruction to generate one or more new queries that are similar to the input query but do not reference the same entities as the input query can be, e.g., an image of a different medicine cabinet with different number of shelves and types of medicines. Both the input query and the new query are images in which medical products need to be identified, but, while the new query is similar to the input query, the new query does not reference the same entities as are in the input query, e.g., the new query has a different types or subtypes of medical products, e.g., different labels of prescription drugs with different patient or drug information, different medical devices (e.g., hearing aids are swapped with a glucose monitor, blood pressure cuff is replaced with an insulin pump) and so on.

As another example for such cases, for the task of intent recognition, (e.g., a spoken command), the student input can include an input query that includes audio spectrogram of a spoken command such as "show the tv show <tv-show-title> on Bill's TV", and the result of a natural language instruction to generate one or more new queries that are similar to the input query but do not reference the same entities as the input query can be, e.g., an audio spectrogram that includes speech stating "show the movie <movie-title> on Jill's TV". Both the input query and the new query are spoken utterances in which the intent needs to be recognized, but, while the new query is similar to the input query, the new query does not reference the same entities as are in the input query, i.e.,

type of media "tv show", the title of the media <tv-show-title> and a person's name Bill are replaced with "movie", <movie-title> and Jill respectively. Additionally, the speech represented as an audio-spectrogram can be of a voice that is of a different pitch and tone.

In some cases, the student input includes the input query and (i) a natural language instruction to generate one or more new queries that replace each entity referenced in the input query with a respective different entity, (ii) one or more example input query - additional query pairs, or (iii) both.

As an example for such cases, for the task of solving math word problems, the student input can include the input query "Raul had $87 to spare so he decided to go to the bookshop. Raul bought 8 comics, each of which cost $4. How much money does Raul have left?", and the result of a natural language instruction to generate one or more new queries that replace each entity referenced in the input query with a respective different entity can be, e.g., "Emily had $92 to spend at the ice cream shop. She bought 4 ice cream cones, each of which cost $3. How much money does Emily have left?". The new query replaces each entity reference in the input query, i.e., Raul is replaced with Emily, $87 is replaced with $92, book shop is replaced with ice cream shop, and so on.

As another example for such cases, for the task of object detection in an image (e.g., detecting and identifying an object instance among objects in a scene), the student input can include the input query that includes an image of a scene. The result of a natural language instruction to generate one or more new queries that replace each entity referenced in the input query with a respective different entity can be, e.g., a new query that includes an image of a different scene with the same number of objects in the same spatial arrangement as the input query image but with entities that are not the same as those in the input query image, e.g., if the input query image includes cars with license plate numbers and street signs, then the new query image of a different scene can include cars and street signs arranged the same as the input query image includes but with the license plate numbers and street names replaced. The new query replaces each entity reference in the input query, e.g., license plate numbers and the street names of the previous example are changed.

As another example for such cases, for the task of object detection in an image (e.g., detecting and identifying medical products in a medicine cabinet), the student input can include the input query that includes an image of a user's medicine cabinet, and the result of a natural language instruction to generate one or more new queries that replace each entity referenced in the input query with a respective different entity can be, e.g., an image of a different medicine cabinet with the same number of shelves but a variation of the medical products found on each shelf in the input image, e.g., a pill bottle can be replace with one with a different prescription and patient information label, the product ID of a visible glucose meter device can be replaced, and so on. The new query replaces each entity reference in the input query, i.e., the labels of pill bottles are changed and the visible product IDs of devices are changed.

As another example for such cases, for the task of intent recognition, (e.g., a spoken command), the student input can include an input query that includes audio spectrogram of a spoken command such as "switch to Bill's profile and display the photos from his most recent vacation to Mexico", and the result of a natural language instruction to generate one or more new queries that replace each entity referenced in the input query with a respective different entity can be, e.g., an audio spectrogram that includes speech stating "switch to Jill's profile and display photos from her family reunion in Philadelphia, PA". The new query replaces each entity reference in the input query, i.e., Jill replaces Bill, family reunion replaces vacation, Philadelphia, PA replaces Mexico.

In some implementations, when the student input includes a natural language instruction to generate one or more new queries, the teacher query includes the example queries (i.e., the one or more new queries). For example, the above example new query "Emily had $92 to spend at the ice cream shop. She bought 4 ice cream cones, each of which cost $3. How much money does Emily have left?" for the input query "Raul had $87 to spare so he decided to go to the bookshop. Raul bought 8 comics, each of which cost $4. How much money does Raul have left?" can be included in the teacher query.

In some cases, when the student input includes a natural language instruction to generate one or more new queries, the system or a user can specify the number of one or more new queries through a pre-determined parameter value, e.g., a parameter value for *expansion size,* included in the student input. For example, the system or a user can specify the number of new queries to be *expansion size* 1, 2, 5, or 10 new queries.

Generally, the example pairs (i.e., example input query - natural language description pairs or example input query - additional query pairs) included in the student input are private examples with sensitive information that the system will not leak into the generated teacher query of the student language model neural network. When processing the student input that includes example pairs, the student language model considers the entire group of example pairs jointly to generate natural descriptions and new example queries for the teacher query and is thus able to combine information from the grouped, private example pairs.

The example pairs included in the student input can originate from a variety of sources, including examples pairs that are previously system processed input queries and respective system generated responses to the input queries, or example pairs stored and maintained by the system (created either by a user or another system).

In some cases, the system will only generate a student input for an input query if the student input includes a *group size* predefined number of example pairs. For example, the system will only generate a student input if *group size* = 1, 2, 4, or 8 example pairs. When group size example pairs are not available, in some cases, the system waits until a sufficient number of example pairs are available to generate the student input. In other cases, when group size example pairs are not available, the system defaults to using as many available examples as possible without exceeding the group size limit. For example, when group size is 3 the system can use 0, 1, 2, or 3 example pairs, depending on the number of example pairs that are available.

In some cases, when the student input specifies generating one or more new queries, the system can use a "template" to generate the new queries, where the template specifies what format the queries have. That is, the system can provide or determine a template about the structure of the queries to include in the student input and can follow the template when generating new queries. For example, the system can include an instruction that outlines the template that new queries must follow in the student input.

In some cases, the system determines the template to include in the student input by retrieving a system stored template based on the input query. In other cases, the system uses another system to determine a template based on the input query. In some cases, instead of including the template in the student input, the system uses the template to determine a "constrained decoding configuration" for use with the student language model neural network when generating new queries according to the template.

For example, for the task of solving math word problems, an input query can have the form "Question : <question>", where <question> represents the core math word problem, and a template can specify that the new query can be represented as "Question: <new_question>" where <new_question> represents a new example core math word problem.

As another example, for the task of object detection in an image (e.g., detecting and identifying an object instance among objects in a scene), an input query can have the form "Detection Image: <image>", where <image> represents the image containing potentially detectable objects and a template can specify that the new query can be represented as "Detection Image: <new_image>" where <new_image> represented a new example image with potentially detectable objects.

As another example, for the task of object detection in an image (e.g., detecting and identifying medical products in a medicine cabinet), an input query can have the form "Detection Image: <image>", where <image> represents the image containing potentially detectable objects and a template can specify that the new query can be represented as "Detection Image: <new_image>" where <new_image> represented a new example image with potentially detectable objects.

As another example, for the task of intent recognition, (e.g., a spoken command), an input query can have the form "Spoken Utterance: <audio_data>", where <audio_data> represents the audio data and a template can specify that the new query can be represented as "Spoken Utterance: <new_audio_data>" where <new_audio_data> represents a new example audio data.

In some cases, prior to processing a student input that includes the input query using the student language model neural network to generate, as output, a teacher query for a teacher language model neural network, the system determines that generating an accurate response to the input query requires making use of the teacher language model neural network. That is, before the system performs step 204, the system determines whether to use the teacher language model neural network in the process of generating a response to the input query.

For example, the system can process the input query using a classifier neural network that, e.g., predicts a score representing if generating an accurate response to the input query requires making use of the teacher language model neural network and, if the predicted score exceeds a threshold, then the system determines to make use of the teacher neural network.

As another example, the system can process the input query using the student language model neural network to generate student output(s) that are candidate responses to the input query and determine, based on the candidate responses, that generating an accurate response requires the use of the teacher language model neural network.

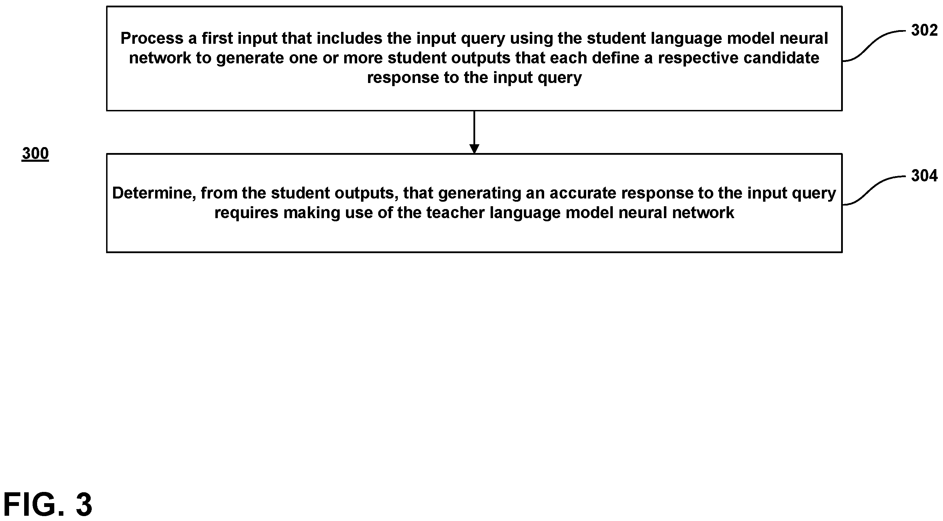

Further details for determining that generating an accurate response to the input query requires making use of the teacher language model neural network are descried below with reference to FIG. 3.

The system provides the teacher query as an input to the teacher language model neural network (step 206).

As described above, in some implementations, the system deploys the student language model neural network on a user device (e.g., a smart phone, a tablet, a laptop, and so on) and deploys the teacher language model neural network on one or more remote computers (e.g., one or more central local servers, one or more cloud based servers, and so on) that are remote from the user device. For some of these implementations, the system provides the teacher query from the user device to the one or more remote computers over a data communication network (e.g., the internet, a local area network, a wireless network, and so on).

As described above, in some implementations, the teacher language model neural network has more parameters than the student language model neural network.

For example, the teacher neural network can be Gemini 1.0 Ultra with trillions of parameters and the student neural network can be Gemini 1.0 Nano-2 or Pro with billions or hundreds of billion parameters respectively, all of which are available from Google and are described in arXiv:2312.11805.

As another example, the teacher neural network can be Gemma-7B with 7 billion parameters and the student neural network can be Gemma-2B with 2 billion parameters respectively as are described in arXiv:2403.08295.

The system obtains, as output from the teacher language model neural network and in response to the teacher query, a respective example response for each of one or more example queries for performing the task (step 208).

In some implementations, the output of step 208 is generated in response to an input that includes the teacher query and a natural language instruction to generate responses to the example queries. That is, the input for the teacher language model neural network to generate the output includes the teacher query and additional components (i.e., natural language instruction to generate responses to the example queries).

In other words, the system or, when the teacher language model is remote from the student language model, another system processes an input that includes the teacher query and, in some cases, a natural language instruction using the teacher language model neural network to generate a respective example response for each of one or more example queries for performing the task.

In some cases, when the teacher query includes a natural language description of the input query that specifies one or more properties of the task, the output from the teacher language model neural network includes one or more example queries and the respective example responses. That is, the teacher language model neural network generates the output in response to an input that includes the teacher query and a natural language instruction to generate example queries that have the one or more properties specified by the natural language description and corresponding example responses for these example queries.

For such cases, sometimes the parameter *expansion size,* as described above, determines the number of example queries the teacher language model neural network will generate.

In some cases, the system can use a "template" to generate an example response for each of one or more example queries, where the template specifies what format the responses have. That is, the system can provide or determine a template about the structure of the response to include in the input to the teacher language model neural network and can follow the template when generating example responses for each of one or more example queries. For example, the system can include an instruction that outlines the template that example responses must follow in the input to the teacher language model neural network.

In some cases, the system determines the template to include in the input to the teacher language model neural network by retrieving a system stored template based on the input query. In other cases, the system uses another system to determine a template based on the input query.

In some cases, instead of including the template in the input to the teacher language model neural network, the system uses the template to determine a "constrained decoding configuration" for use with the teacher language model neural network when generating example responses according to the template.

For example, an example response to a math word problem, e.g., the example math word problems described above, can have the template format "Answer : <step -by-step reasoning> \n #### <final number>", where <step-by-step-reasoning> represents natural language reasoning of how to solve the math word problem, "\n" is a next line character, and "#### <final number>" represents the numerical answer to the math word problem preceded by pound signs. The system can then use this template format when generating example responses.

As another example, an example response to an object detection in an image problem, e.g., detecting and identifying an object instance among objects in a scene described above, can have the template format "objects: <image of bounded boxed object-1> - <text description of bounded boxed object-1>\n <image of bounded boxed object-2> - <text description of bounded boxed object-1>\n", where <image of bounded boxed object-1> represents the bounded box image of a detected object and "\n" is a next line character. The system can then use this template format when generating example responses.

As another example, an example response to an object detection in an image problem, e.g., detecting and identifying medical products in a medicine cabinet described above, can have the template format "objects: <image of bounded boxed object-1> - <text description of bounded boxed object-1>\n <image of bounded boxed object-2> - <text description of bounded boxed object-1>\n", where <image of bounded boxed object-1> represents the bounded box image of a detected object and "\n" is a next line character. The system can then use this template format when generating example responses.

As another example, an example response to an intent recognition problem, e.g., the intent recognition problems described above, can have the template format "Intent: <intent-label>, where <intent-label> represents a category of intent (e.g., playback photo, playback video, call number, and so on). The system can then use this template format when generating example responses.

In some cases, when the teacher language model neural network generates both example queries and respective responses, the system can use a template for both the example queries, e.g., the example query template described above, and respective responses, e.g., the example response template described above, to generate the example queries and respective responses.

For example, when the teacher language model neural network processes a teacher query that includes a natural language description of the input query and generates both example queries and corresponding responses to these example queries, the system can use both a query template to generate example queries and a response template to generate responses to these example queries.

In some implementations, when the system provides the teacher query from a user device to one or more remote computer over a data communication network, the system receives, by the user device and over the data communication network, data that includes the respective example responses from the teacher language model neural network.

For example, when the system deploys the student language model neural network on a user device (e.g., a smart phone, a tablet, a laptop, and so on) and deploys the teacher language model neural network on one or more remote computers, the system can receive data packets that is data that includes the respective example response, over the internet using a protocol like TCP/IP (Transmission Control Protocol/Internet Protocol) to facilitate data packet transmission from the teacher language model neural networks.

The system processes an augmented input query that includes (i) the input query, (ii) the one or more example queries, and (iii) the respective example responses for the example queries using the student language model neural network to generate a response to the input query (step 210).

The system provides, as output, the response to the input query (step 212).

For example, the system can provide the output to the user device using a communication network, e.g., a cloud-based network, the internet, a local network, a wireless network, etc., and the user device in turn can present the output to the user of the user device, e.g., display the output using a device display screen. For example, as described earlier the response can be an output sequence of tokens detokenized (i.e., the sequence of tokens can be converted to natural language text, image, video, audio, any combination of these, and so on) and presented to the user, e.g., through a device display screen and speaker, e.g., displaying natural language text, image, video, playing audio, or any combination of these.

Prior to the system performing example process 200 or any process of performing a task by using a teacher language model neural network to provide additional information to a student language model neural network, the system or another system trains the student language model neural network and the teacher language model neural network.

For example, the system can "pre-train" the student and teacher language model neural networks (i.e., train the language model neural networks on large scale datasets to learn semantic relationships between language model inputs and outputs).

Generally, the training of the student language model neural network and teacher language model neural network are independent and are performed separately. For example, it is often the case that the training datasets and methods of updating trainable parameters for training the student are independent of those for training the teacher language model neural network.

Although, in some cases, the training of the student and teacher language model neural networks include common elements. For example, it is possible for the training datasets of both the student and teacher language model neural networks to have common training examples, or for the training of both to include common methods of updating the trainable parameters.

What follows is a description of an example of training a language model neural network that applies to both the student language model neural network and teacher language model neural network.

The system or another training system trains the language model neural network by repeatedly updating the trainable parameters of the language model neural network using a training dataset. The system can train the language model neural network on a training dataset that includes, for each of a plurality of training examples, a respective training input and a corresponding target output. That is, the system can repeatedly perform the following described example process using training examples to train the language model neural network from scratch, i.e., train from randomly initialized parameters of the neural network, or to fine-tune, i.e., further update previously determined parameters of the neural network.

In particular, the system obtains a training dataset. The training dataset includes a plurality of training examples, where each training example includes at least a training input and a target output.

For each training example, the system processes the training input using the language model neural network to generate a respective output. That is, the system processes the training input using the neural network to generate an output that represents a prediction of the target output.

The system evaluates an objective using the outputs for each training example. Generally, the objective is one that when optimized results in the neural network generating outputs for training inputs that more closely resemble the target outputs.

For example, the system can evaluate the cross-entropy loss between an output and target output for all training examples.

For example, the system can define the objective to be the sum or average of the cross-entropy loss over all training examples. The cross-entropy loss for a training example refers to the sum of the losses between each predicted token of the output and the respective token of the target output, where the loss between a predicted token of the training output and the target token of the target output is the negative log probability according to the neural network of selecting the predicted token to be the same as the target token.

The system updates the language model neural network trainable parameters to optimize the objective.

The system can update the neural network trainable parameters to optimize the objective in any variety of ways, e.g., gradient based method, evolutionary algorithm-based method, Bayesian optimization, etc.

For example, the system can optimize the objective using any of a variety of gradient descent techniques (e.g., batch gradient descent, stochastic gradient descent, or mini-batch gradient descent) that include the use of a backpropagation technique to estimate the gradient of the loss with respect to neural network trainable parameters and to update the learnable parameters accordingly.

Generally, the system repeats the above steps until one or more criteria are satisfied (e.g., the system performs a pre-determined number of iterations, the updates to the trainable parameters no longer exceed a pre-determined magnitude of change, a metric regarding a validation dataset exceeds a pre-determined value, and so on).

In some cases, after pre-training the student language model neural network, the teacher language model neural network, or both, the system can fine-tune the student language model neural network, the teacher language model neural network, or both. That is, the system can first pre-train the student model, teacher model, or both but later fine-tune the student model, teacher model, or both to increase performance of any of these models over particular tasks, over particular inputs, or both.

The system can fine-tune the language model using any of a variety of methods.

For example, the system can fine tune the language model using supervised fine tuning, RLHF (Reinforcement Learning from Human Feedback), or RLAIF (Reinforcement Learning from Artificial Intelligence Feedback), and so on.

FIG. 3 is a flow diagram of an example process 300 for determining that generating an accurate response to the input query requires making use of the teacher language model neural network. For convenience, the process 300 will be described as being performed by a system of one or more computers located in one or more locations. For example, a computer system, e.g., the computer system 100 of FIG. 1, appropriately programmed in accordance with this specification, can perform the process 300.

The system processes a first input that includes the input query using the student language model neural network to generate one or more student outputs that each define a respective candidate response to the input query (302).

While the first input includes at least the input query to generate candidate response(s), it can also include additional elements. For example, the first input can additionally include natural language instructions, one or more example queries and respective example responses, or both.

To generate the one or more student outputs, the system can, for example, repeatedly sample output sequences that represent the student outputs by repeatedly processing the first input with the student language model neural network. That is, when the system repeats processing the first input to generate the student output and the system selects tokens according to the probabilities over the tokens determined by the student neural network, e.g., as described above for the case that the student language model is an auto-regressive neural network, the system will sample different plausible output sequences because selecting tokens according to the probabilities over the tokens can result in different student output sequences.

In some cases, the system can repeatedly sample output sequences through the technique of "temperature decoding" by repeatedly processing the first input with the student language model neural network with a temperature parameter $\tau$. That is, the system can repeatedly sample output sequences representing student outputs by iteratively selecting tokens for the output sequence according to their corresponding probabilities as described above, but the probabilities can be modified using a temperature parameter $\tau$. For example, the temperature $\tau$ can modify the probability of selecting token $v_k$ as

$$p'(v_k) = \frac{e^{p(v_k)/\tau}}{\sum_i e^{p(v_i)/\tau}}$$

where $p'(v_k)$ represents the temperature modified probability of selecting token $v_k$, $p(v_k)$ represent the original probability of selecting $v_k$, the index $i$ runs over all eligible tokens for selection and the variable $\tau$ is the temperature parameter that can be set. The higher the value of $\tau$, the more equal the modified probabilities for the tokens become among each other. While the lower the value of $\tau$, the more polarizing the modified probabilities for the tokens become relative to the original probabilities, with higher original probabilities becoming higher modified probabilities and lower original probabilities becoming lower modified probabilities. Therefore, the various values of $\tau$ in the context of temperature decoding control the probabilistic variability of sampled output sequences, with a value of $\tau=1.0$ not modifying the original token selection probabilities, lower values of $\tau$ (e.g., 0.1, 0.2, 0.5, and so on) resulting in sampled output sequences that more often closely align with a 'highest probability selection procedure' (i.e., the system selects each token of the output sequence according to the highest probability over the tokens of the vocabulary) and higher values of $\tau$ (e.g., 1.1, 1.2, 1.5, 2.0, and so on) resulting in output sequences that more often closely align with a 'random selection procedure' (i.e., the system selects each token of the output sequence randomly from among the tokens of the vocabulary).

The system determines, from the student outputs, that generating an accurate response to the input query requires making use of the teacher language model neural network (304). For example, the system can evaluate how many candidate student outputs agree (i.e., have semantically equivalent information) and, if a predetermined threshold is not exceeded (e.g., the percentage of student outputs that agree do not exceed an agreement percentage), the system can determine that generating an accurate response to the input query requires making use of the teacher language model neural network.

As another example, the system can evaluate the variance of candidate student outputs and, in response to high variance, determine that generating an accurate response to the input query requires making use of the teacher language model neural network.

As a particular example, student outputs can contain quantitative values (i.e., values that can be represented numerically, e.g., answers to math word problems) and the statistical variance (i.e., the expected squared deviation from the mean) of those quantitative values can be used with a criterion (e.g., the statistical variance exceeds a predetermined threshold value) to determine if the teacher language model neural network is necessary.

As another particular example, student outputs can contain qualitative values (i.e., values that can be represented as categorical values, e.g., type of an objected detected in an image) and the entropy (i.e., the average level of uncertainty of the correct categorical value the student output should include) of those qualitative values can be used with a criterion (e.g., the entropy exceeds a predetermined threshold value) to determine if the teacher language model neural network is necessary. That is, the higher the entropy, the higher the variability of the candidate student outputs, and the more likely that generating an accurate response to the input query requires making use of the teacher language model neural network.

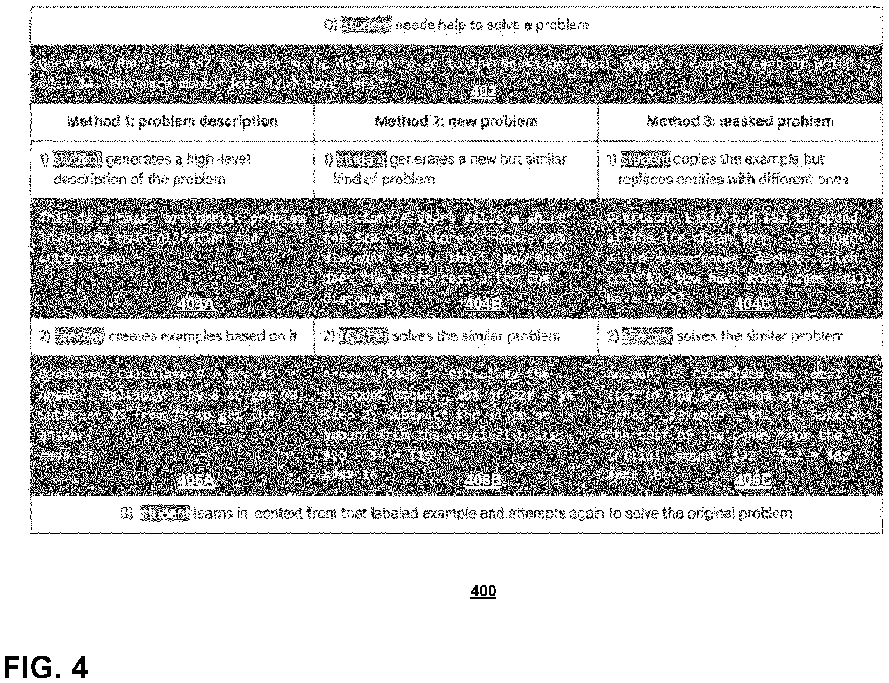

FIG. 4 shows an example 400 enumeration of steps (i.e., steps 0-3) included in the process for performing a task by using a teacher language model neural network to provide additional information to a student language model neural network.

The steps 0-3 include an input query 402, example teacher queries 404A-C, and example outputs 406A-C from the teacher in response to the respective teacher queries 404A-C. For convenience, the steps 0-3 will be described as being performed by a system of one or more computers located in one or more locations. For example, a computer system, e.g., the computer system 100 of FIG. 1, appropriately programmed in accordance with this specification, can perform the enumerated steps 0-3.

The steps of FIG. 4 begin with step 0), where the system determines that generating an accurate response to the input query 402 (which is a math word problem) requires making use of a teacher language model neural network. For example, the system can use the process described with reference to FIG. 3 above to determine that generating an accurate response to the input query 402 requires making use of a teacher language model neural network.

Then the system performs step 1), where the system processes a student input using the student language model neural network to generate a teacher query (e.g., 404A, 404B, or 404C). Three different methods for doing so are shown in FIG. 4. Teacher query 404A is an example natural language description of the input query 402 that specifies the one or more properties of the input query. While teacher query 404B is an example of a generated new query that is similar to the input query 402 but does not reference the same entities as the input query 402, and teacher query 404C is an example of a generated new query that replaces each entity referenced in the input query 402 with a respective different entity.

Next, the system performs step 2), where the teacher neural network generates an output (e.g., 406A, 406B, or 406C) in response to the teacher query (e.g., respectively 404A, 404B, or 404C). The example output 406A includes an example query (i.e., "Question: Calculate 9 x 8 - 25") along with the respective example response (i.e., "Answer: Multiply 9 by 8 to get 72. Subtract 25 from 72 to get the answer.\n#### 47"). While example outputs 406B and 406C include just the example responses to the respective new queries.

Then lastly, the system performs step 3), where the student language model neural network processes an augmented input that includes the (i) the input query 402, (ii) the one or more example queries, and (iii) the respective example responses for the example from the output (404A, 404B, or 404C). The one or more example queries (i.e., new queries generated as part of the student input or the teacher query) along with their respective responses facilitates the student model neural network from using in-context learning when processing the input query 402.

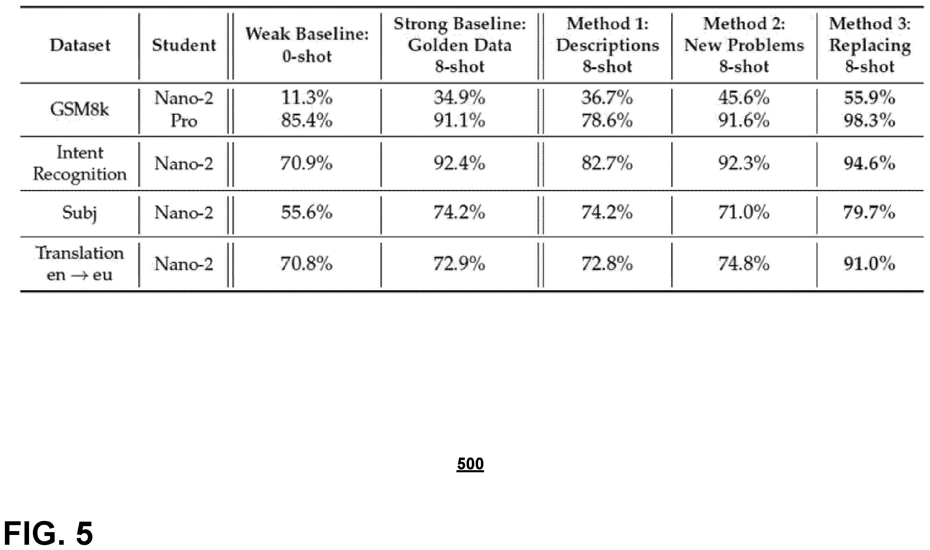

FIG. 5 is an example 500 of the performance of the described techniques and shows that the described methods significantly improve the task success rate of the student language model neural network for performing various instances of various tasks. The task success rates displayed in the table is normalized according to the task success rate of the teacher language model neural network when evaluating the same input queries that the student language model processes.

In particular, example 500 shows the performance of the described techniques compared to benchmark techniques for various tasks. The column labeled "Dataset" indicate what tasks were used to evaluate the performance, where "GSM8K" indicates the task of solving math word problem tasks, "Intent Recognition" indicates the task to identifying a user's intent, "Subj" indicates classifying whether a statement is subjective or objective, and "Translation en -> eu" indicates the task of translating English to Basque. The column labeled "Student" indicates what language model the student language model neural network is, i.e., the Gemini 1.0 Nano-2 or Pro model. For example 500, The teacher language model neural network is always the Gemini 1.0 Ultra model. The column labeled "Weak Baseline: 0-shot" includes the task success rate of the conventional technique of using the student neural network to process the input query to generate a response to an input query for the various tasks described above. The column labeled "Strong Baseline: Golden Data 8-shot" refers to the student language model neural network processing an augmented input with "golden" (expert user curated) example queries and corresponding responses along with the input query to generate a response for the input query. The columns "Method 1: Descriptions 8-shot", "Method 2: New problems 8-shot", and "Method 3: Replacing 8-shot" refer to the described techniques, where method 1 refers to the system generating a teacher query that includes a natural language description of the input query that specifies one or more properties of the input query, method 2 refers to the system generating a teacher query that includes new queries that are similar to the input query but do not reference the same entities as the input query, and method 3 refers to the system generating a teacher query that includes new queries that replace each entity referenced in the input query with a respective different entity. Each of methods 1-3 involve the generation of 8 example response for each of 8 example queries for performing the task.

Example 500 shows that all methods using the described techniques (i.e., method 1, method 2, and method 3) generally outperform the weak baseline, with an exception of method 1 using the Pro student language model for the math word problem task. Additionally, methods 1 and 2 perform approximately as well as the strong baseline, while method 3 always outperforms the strong baseline.

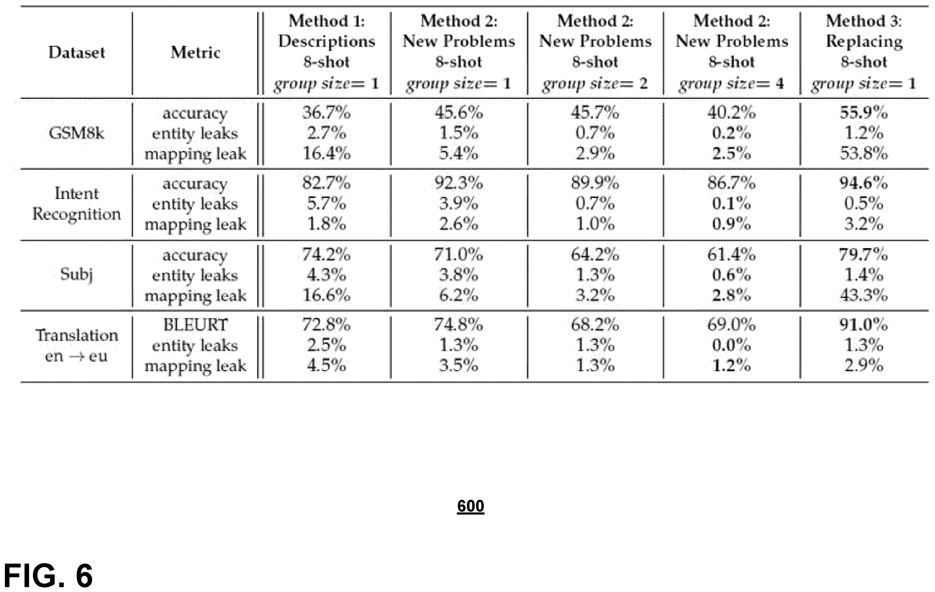

FIG. 6 is an example 600 of the performance of the described techniques.

More specifically, example 600 shows the performance of the described techniques, summarized under the "Metric" column, in terms of accuracy, BLEURT (for language translation task), an entity leak metric, and a mapping leak metric for various tasks. Accuracy refers to a generated response correctly fulfilling the task represented by an input query, and BLEURT is a value between 0 and (approximately 1) that indicates how similar the generated text is to the reference texts. The entity leak metric is a measure of how many of the entities in the original example are present in the teacher query generated by the student language model, and the mapping leak metric is a measure of how often the teacher language model is able to correctly map an original input query to its corresponding teacher query generated by the student language model out of 100 options. The tasks represented in the "Dataset" are the same as described above for FIG. 5. Additionally, methods 1-3 are the same as described above for FIG. 5 with an additional indication of the number example input query - appropriate teacher query element type pairs included in the student input (i.e., the student input of method 1 includes example input query - natural language description pairs, the student input of methods 2 and 3 includes example input query - new query pairs) through the value of *group size* (e.g., group size = 4 for method 2 signifies the student input included 4 example input query - additional query pairs).

In particular, example 600 shows the described techniques can preserve the data security of the input query when generating a teacher query well, with varying levels of success depending on the method and task. Generally, the accuracy (BLEURT) improves in order of method 1, method 2, and method 3, with method 3 generally having the highest accuracy. Additionally, method 2 demonstrates how data security can be enhanced as group size increases, with generally over a 50% reduction in entity leaks and mapping leaks when increasing group size from 1 to 2.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Aspects of the present disclosure may be as set out in the following clauses:

Clause 1. A method performed by one or more computers, the method comprising:

receiving an input query for performing a task using a student language model neural network;
processing a student input comprising the input query using the student language model neural network to generate, as output, a teacher query for a teacher language model neural network, wherein the teacher query characterizes the task while preserving privacy of the input query;
providing the teacher query as an input to the teacher language model neural network;
obtaining, as output from the teacher language model neural network and in response to the teacher query, a respective example response for each of one or more example queries for performing the task;
processing an augmented input query that comprises (i) the input query, (ii) the one or more example queries, and (iii) the respective example responses for the example queries using the student language model neural network to generate a response to the input query; and
providing, as output, the response to the input query.

Clause 2. The method of clause 1, wherein the student language model neural network is deployed on a user device and the teacher language model neural network is deployed on one or more remote computers that are remote from the user device.

Clause 3. The method of clause 2, wherein providing the teacher query as input to the teacher language model neural network comprises providing the teacher query from the user device to the one or more remote computers over a data communication network.

Clause 4. The method of clause 3, wherein obtaining, as output from the teacher language model neural network and in response to the teacher query, a respective example response for each of one or more example queries comprises:
receiving, by the user device and over the data communication network, data comprising the respective example responses.

Clause 5. The method of any one of clauses 2-4, wherein the query input is received from a user of the user device.

Clause 6. The method of any preceding clause, wherein the teacher query comprises a natural language description of the input query that specifies one or more properties of the task.

Clause 7. The method of clause 6, wherein the output from the teacher language model neural network comprises one or more example queries and the respective example responses and is generated in response to an input that comprises the teacher query and a natural language instruction to generate example queries and corresponding example responses that have the one or more properties specified by the natural language description.

Clause 8. The method of any one of clauses 6 or 7, wherein the student input comprises the input query and (i) a natural language instruction to generate a natural language description of the input query that specifies the one or more properties of the input query, (ii) one or more example input query - natural language description pairs, or (iii) both.

Clause 9. The method of any one of clauses 1-5, wherein the teacher query comprises the example queries.

Clause 10. The method of clause 9, wherein the output from the teacher language model neural network comprises the respective example responses and is generated in response to an input that comprises the teacher query and a natural language instruction to generate responses to the example queries.

Clause 11. The method of any one of clauses 9 or 10, wherein the student input comprises the input query and (i) a natural language instruction to generate one or more new queries that are similar to the input query but do not reference the same entities as the input query, (ii) one or more example input query - additional query pairs, or (iii) both.

Clause 12. The method of any one of clauses 9 or 10, wherein the student input comprises the input query and (i) a natural language instruction to generate one or more new queries that replace each entity referenced in the input query with a respective different entity, (ii) one or more example input query - additional query pairs, or (iii) both.

Clause 13. The method of any preceding clause, wherein the teacher language model neural network has more parameters than the student language model neural network.

Clause 14. The method of any preceding clause, further comprising:
prior to processing a student input comprising the input query using the student language model neural network to generate, as output, a teacher query for a teacher language model neural network, determining that generating an accurate response to the input query requires making use of the teacher language model neural network.

Clause 15. The method of clause 14, wherein determining that generating an accurate response to the input query requires making use of the teacher language model neural network comprises:
processing the input query using a classifier neural network.

Clause 16. The method of clause 14, wherein determining that generating an accurate response to the input query requires making use of the teacher language model neural network comprises:

processing a first input comprising the input query using the student language model neural network to generate one or more student outputs that each define a respective candidate response to the input query; and
determining, from the student outputs, that generating an accurate response to the input query requires making use of the teacher language model neural network.

Clause 17. A system comprising one or more computers and one or more storage devices storing instructions that when executed by the one or more computers cause the one or more computers to perform the operations of the respective method of any one of clauses 1-16.

Clause 18. One or more computer storage media storing instructions that when executed by one or more computers cause the one or more computers to perform the operations of the respective method of any one of clauses 1-16.

Claims

1. A method performed by one or more computers, the method comprising:

   receiving an input query for performing a task using a student language model neural network; processing a student input comprising the input query using the student language model neural network to generate, as output, a teacher query for a teacher language model neural network, wherein the teacher query characterizes the task while not including sensitive information of the input query;
   providing the teacher query as an input to the teacher language model neural network;
   obtaining, as output from the teacher language model neural network and in response to the teacher query, a respective example response for each of one or more example queries for performing the task;
   processing an augmented input query that comprises (i) the input query, (ii) the one or more example queries, and (iii) the respective example responses for the example queries using the student language model neural network to generate a response to the input query; and
   providing, as output, the response to the input query.

2. The method of claim 1, wherein the student language model neural network is deployed on a user device and the teacher language model neural network is deployed on one or more remote computers that are remote from the user device.

3. The method of claim 2, wherein providing the teacher query as input to the teacher language model neural network comprises providing the teacher query from the user device to the one or more remote computers over a data communication network.

4. The method of claim 3, wherein obtaining, as output from the teacher language model neural network and in response to the teacher query, a respective example response for each of one or more example queries comprises:
   receiving, by the user device and over the data communication network, data comprising the respective example responses.

5. The method of any one of claims 2-4, wherein the query input is received from a user of the user device.

6. The method of any preceding claim, wherein the teacher query comprises a natural language description of the input query that specifies one or more properties of the task.

7. The method of claim 6, wherein the output from the teacher language model neural network comprises one or more example queries and the respective example responses and is generated in response to an input that comprises the teacher query and a natural language instruction to generate example queries and corresponding example responses that have the one or more properties specified by the natural language description.

8. The method of any one of claims 6 or 7, wherein the student input comprises the input query and (i) a natural language instruction to generate a natural language description of the input query that specifies the one or more properties of the input query, (ii) one or more example input query - natural language description pairs, or (iii) both.

9. The method of any one of claims 1-5, wherein the teacher query comprises the example queries; and optionally
   wherein the output from the teacher language model neural network comprises the respective example responses and is generated in response to an input that comprises the teacher query and a natural language instruction to generate responses to the example queries.

10. The method of claim 9, wherein the student input comprises the input query and (i) a natural language instruction to generate one or more new queries that are similar to the input query but do not reference the same entities as the input query, (ii) one or more example input query - additional query pairs, or (iii) both; or
    wherein the student input comprises the input query and (i) a natural language instruction to generate one or more new queries that replace each entity referenced in the input query with a respective different entity, (ii) one or more example input query - additional query pairs, or (iii) both.

11. The method of any preceding claim, wherein the teacher language model neural network has more parameters than the student language model neural network.

12. The method of any preceding claim, further comprising:
    prior to processing a student input comprising the input query using the student language model neural network to generate, as output, a teacher query for a teacher language model neural network, determining that generating an accurate response to the input query requires making use of the teacher language model neural network.

13. The method of claim 12, wherein determining that generating an accurate response to the input query requires making use of the teacher language model neural network comprises:
processing the input query using a classifier neural network; or
wherein determining that generating an accurate response to the input query requires making use of the teacher language model neural network comprises:

> processing a first input comprising the input query using the student language model neural network to generate one or more student outputs that each define a respective candidate response to the input query; and
> determining, from the student outputs, that generating an accurate response to the input query requires making use of the teacher language model neural network.

**14.** A system comprising one or more computers and one or more storage devices storing instructions that when executed by the one or more computers cause the one or more computers to perform the operations of the respective method of any one of claims 1-13.

**15.** One or more computer storage media storing instructions that when executed by one or more computers cause the one or more computers to perform the operations of the respective method of any one of claims 1-13.

EP 4 625 253 A1

**Response to the Input Query 116**

**Computer System 100**

**Student Language Model Neural Network 106**

**Augmented Input Query 114**

**Teacher Query 108**

**Student Language Model Neural Network 106**

**Example Response(s) 112**

**Teacher Language Model Neural Network 110**

**Student Input 104**

**Input Query 102**

FIG. 1

EP 4 625 253 A1

| Receive an input query for performing a task using a student language model neural network | — 202 |

↓

| Process a student input that includes the input query using the student language model neural network to generate, as output, a teacher query for a teacher language model neural network that characterizes the task while not including sensitive information of the input query | — 204 |

↓

| Provide the teacher query as an input to the teacher language model neural network | — 206 |

↓

200

| Obtain, as output from the teacher language model neural network and in response to the teacher query, a respective example response for each of one or more example queries for performing the task | — 208 |

↓

| Process an augmented input query that includes (i) the input query, (ii) the one or more example queries, and (iii) the respective example responses for the example queries using the student language model neural network to generate a response to the input query | — 210 |

↓

| Provide, as output, the response to the input query | — 212 |

# FIG. 2

Process a first input that includes the input query using the student language model neural network to generate one or more student outputs that each define a respective candidate response to the input query — 302

300

Determine, from the student outputs, that generating an accurate response to the input query requires making use of the teacher language model neural network — 304

# FIG. 3

| 0) student needs help to solve a problem | | |
|---|---|---|
| Question: Raul had $87 to spare so he decided to go to the bookshop. Raul bought 8 comics, each of which cost $4. How much money does Raul have left? __402__ | | |
| **Method 1: problem description** | **Method 2: new problem** | **Method 3: masked problem** |
| 1) student generates a high-level description of the problem | 1) student generates a new but similar kind of problem | 1) student copies the example but replaces entities with different ones |
| This is a basic arithmetic problem involving multiplication and subtraction. <br><br> __404A__ | Question: A store sells a shirt for $20. The store offers a 20% discount on the shirt. How much does the shirt cost after the discount? __404B__ | Question: Emily had $92 to spend at the ice cream shop. She bought 4 ice cream cones, each of which cost $3. How much money does Emily have left? __404C__ |
| 2) teacher creates examples based on it | 2) teacher solves the similar problem | 2) teacher solves the similar problem |
| Question: Calculate 9 x 8 - 25 Answer: Multiply 9 by 8 to get 72. Subtract 25 from 72 to get the answer. #### 47 __406A__ | Answer: Step 1: Calculate the discount amount: 20% of $20 = $4 Step 2: Subtract the discount amount from the original price: $20 - $4 = $16 #### 16 __406B__ | Answer: 1. Calculate the total cost of the ice cream cones: 4 cones * $3/cone = $12. 2. Subtract the cost of the cones from the initial amount: $92 - $12 = $80 #### 80 __406C__ |
| 3) student learns in-context from that labeled example and attempts again to solve the original problem | | |

__400__

# FIG. 4

| Dataset | Student | Weak Baseline: 0-shot | Strong Baseline: Golden Data 8-shot | Method 1: Descriptions 8-shot | Method 2: New Problems 8-shot | Method 3: Replacing 8-shot |
|---|---|---|---|---|---|---|
| GSM8k | Nano-2 Pro | 11.3% 85.4% | 34.9% 91.1% | 36.7% 78.6% | 45.6% 91.6% | 55.9% 98.3% |
| Intent Recognition | Nano-2 | 70.9% | 92.4% | 82.7% | 92.3% | 94.6% |
| Subj | Nano-2 | 55.6% | 74.2% | 74.2% | 71.0% | 79.7% |
| Translation en → eu | Nano-2 | 70.8% | 72.9% | 72.8% | 74.8% | 91.0% |

500

# FIG. 5

| Dataset | Metric | Method 1: Descriptions 8-shot *group size= 1* | Method 2: New Problems 8-shot *group size= 1* | Method 2: New Problems 8-shot *group size= 2* | Method 2: New Problems 8-shot *group size= 4* | Method 3: Replacing 8-shot *group size= 1* |
|---|---|---|---|---|---|---|
| GSM8k | accuracy | 36.7% | 45.6% | 45.7% | 40.2% | 55.9% |
| | entity leaks | 2.7% | 1.5% | 0.7% | 0.2% | 1.2% |
| | mapping leak | 16.4% | 5.4% | 2.9% | 2.5% | 53.8% |
| Intent Recognition | accuracy | 82.7% | 92.3% | 89.9% | 86.7% | 94.6% |
| | entity leaks | 5.7% | 3.9% | 0.7% | 0.1% | 0.5% |
| | mapping leak | 1.8% | 2.6% | 1.0% | 0.9% | 3.2% |
| Subj | accuracy | 74.2% | 71.0% | 64.2% | 61.4% | 79.7% |
| | entity leaks | 4.3% | 3.8% | 1.3% | 0.6% | 1.4% |
| | mapping leak | 16.6% | 6.2% | 3.2% | 2.8% | 43.3% |
| Translation en → eu | BLEURT | 72.8% | 74.8% | 68.2% | 69.0% | 91.0% |
| | entity leaks | 2.5% | 1.3% | 1.3% | 0.0% | 1.3% |
| | mapping leak | 4.5% | 3.5% | 1.3% | 1.2% | 2.9% |

<u>600</u>

# FIG. 6

**EP 4 625 253 A1**

Europäisches
Patentamt

European
Patent Office

Office européen
des brevets

# EUROPEAN SEARCH REPORT

**Application Number**

EP 25 16 7130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mohtashami Amirkeivan ET AL: "Social Learning: Towards Collaborative Learning with Large Language Models", arXiv.org, 8 February 2024 (2024-02-08), XP093294951, Retrieved from the Internet: URL:https://arxiv.org/abs/2312.11441 | 1,6-15 | INV. G06N3/045 |
| A | * page 1 - page 19; figure 1 * ----- | 2-5 | |
| A | MURONG YUE ET AL: "Large Language Model Cascades with Mixture of Thoughts Representations for Cost-efficient Reasoning", ARXIV.ORG, CORNELL UNIVERSITY LIBRARY, 201 OLIN LIBRARY CORNELL UNIVERSITY ITHACA, NY 14853, 4 October 2023 (2023-10-04), XP091631706, * pages 1-5; figures 1,2 * ----- | 1-15 | |
| A | LINGJIAO CHEN ET AL: "FrugalGPT: How to Use Large Language Models While Reducing Cost and Improving Performance", ARXIV.ORG, CORNELL UNIVERSITY LIBRARY, 201 OLIN LIBRARY CORNELL UNIVERSITY ITHACA, NY 14853, 9 May 2023 (2023-05-09), XP091505425, * page 1 - page 3; figures 1-10 * ----- | 1-15 | **TECHNICAL FIELDS SEARCHED (IPC)** G06N |
| A | YUN ZHU ET AL: "Towards an On-device Agent for Text Rewriting", ARXIV.ORG, CORNELL UNIVERSITY LIBRARY, 201 OLIN LIBRARY CORNELL UNIVERSITY ITHACA, NY 14853, 22 August 2023 (2023-08-22), XP091598325, * page 1 - page 7; figures 1-2 * ----- | 1-15 | |

The present search report has been drawn up for all claims

| Place of search | Date of completion of the search | Examiner |
|---|---|---|
| The Hague | 14 July 2025 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 625 253 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. HOFFMANN ; S. BORGEAUD ; A. MENSCH ; E. BUCHATSKAYA ; T. CAI ; E. RUTHERFORD ; D. D. L. CASAS ; L. A. HENDRICKS ; J. WELBL ; A. CLARK et al.** Training compute-optimal large language models. *arXiv:2203.15556*, 2022
- **J.W. RAE ; S. BORGEAUD ; T. CAI ; K. MILLICAN ; J. HOFFMANN ; H. F. SONG ; J. ASLANIDES ; S. HENDERSON ; R. RING ; S. YOUNG**. Scaling language models: Methods, analysis & insights from training gopher. *CoRR*, 2021
- **COLIN RAFFEL ; NOAM SHAZEER ; ADAM ROBERTS ; KATHERINE LEE ; SHARAN NARANG ; MICHAEL MATENA ; YANQI ZHOU ; WEI LI ; PETER J. LIU**. Exploring the limits of transfer learning with a unified text-to-text transformer. *arXiv:1910.10683*, 2019

- **DANIEL ADIWARDANA ; MINH-THANG LUONG ; DAVID R. SO ; JAMIE HALL ; NOAH FIEDEL ; ROMAL THOPPILAN ; ZI YANG ; APOORV KULSHRESHTHA ; GAURAV NEMADE ; YIFENG LU**. Towards a human-like open-domain chatbot. *CoRR*, 2020
- **TOM B BROWN ; BENJAMIN MANN ; NICK RYDER ; MELANIE SUBBIAH ; JARED KAPLAN ; PRAFULLA DHARIWAL ; ARVIND NEELAKANTAN ; PRANAV SHYAM ; GIRISH SASTRY ; AMANDA ASKELL et al.** Language models are few-shot learners. *arXiv:2005.14165*, 2020
- **GLAESE et al.** *arXiv:2209.14375*
- **HOFFMANN et al.** *arXiv:2203.15556*